# EUROPEAN PATENT APPLICATION

(11) **EP 1 785 859 A1**
(43) Date of publication of application: **16.05.2007**
(21) Application number: 06123790.5
(22) Date of filing: 09.11.2006
(51) Int. Cl.: G06F 9/46, H04L 29/08

(54) **Web service provision apparatus and method and web service request apparatus and method**

(30) Priority: 11.11.2005 KR 20050108162
(71) Applicant: Samsung Electronics Co., Ltd, Suwon-si, Gyeonggi-do 442-742 (KR)
(72) Inventor: Shin, Kyoung-heun, Gangnam-gu Seoul (KR)
(74) Representative: Robinson, Ian Michael

(57) **Abstract**

Provided are a web service provision apparatus (400) and method and a web service request apparatus (500) and method. The web service provision apparatus (400) includes a message generation unit (420), a session management unit (530) and a task processing unit (410). The message generation unit (420) generates an access request message (600) including connection maintaining information. The session management unit (530) manages a session with a web service request apparatus (500) that has received the access request message (600). The task processing unit (410) processes a task according to a task request message from the web service request apparatus (500), which is received through the session.

## Description

The present invention relates to web services and, more particularly, to a web service provision apparatus and method and a web service request apparatus and method, in which a web service provision apparatus existing within a private network sends an access request message to a web service request apparatus existing outside the private network and then maintains a session with the web service request apparatus, so that the web service request apparatus can receive web services.

Web services provide interoperability between Internet applications on the basis of extensible Markup Language (XML), Simple Object Access Protocol (SOAP), and Web Services Description Language (WSDL) protocol.

XML is a W3C standard for a text-based mark-up language and can represent a variety of expressions and data using tags using a method different from that of HTML. XML is useful for describing structured data having high portability and is generally used to describe data. In particular, XML is used as a data format when mutual exchange with a messaging protocol is required.

SOAP is an XML-based lightweight protocol that was developed for the purpose of exchanging information in a distributed environment, and defines a messaging protocol between a service user and a service provider. Furthermore, SOAP provides a standardized method capable of using XML-based messaging to call a remote service regardless of the platform, OS, or programming language of a target service.

WSDL describes service connection information provided by a web service provider, that is, a service interface, such as the type of messages to be exchanged at the time of binding and operation information provided by the web service provider, using XML.

In other words, WSDL functions to describe web services. In order to describe an XML web service, it is important to define which messages will be generated and received. WSDL solves this problem using the XML schema.

A WSDL document describes an interface for calling a service provided by a service provider. The WSDL document includes the message representing parameter information necessary at the time of calling a service, types, portType corresponding to a service to be called, binding including binding operation information, port for calling a service, and service.

Universal Description, Discovery and Integration (UDDI) is a web service mediation system, which supports the registration of web services and searches for web services.

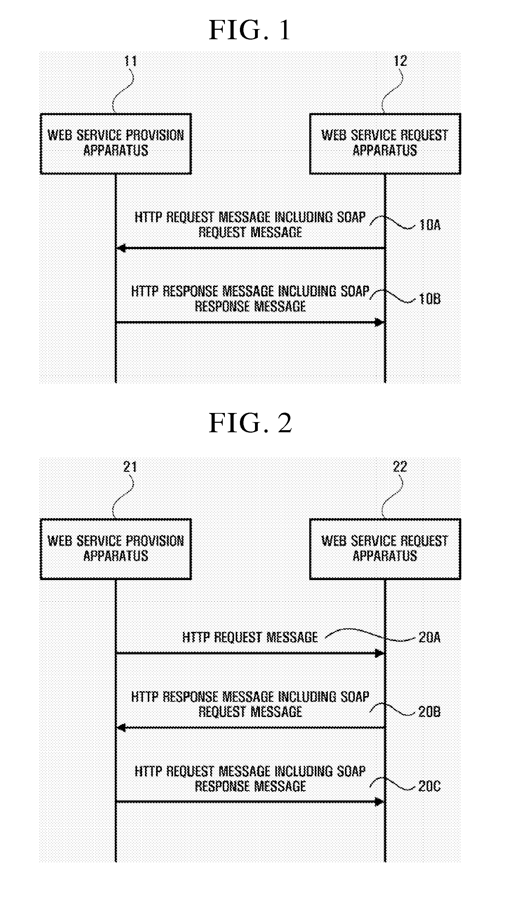

Figure 1 is a diagram showing a prior art web service system using SOAP binding. The web service system includes a web service provision apparatus 11 and a web service request apparatus 12.

The web service system using SOAP binding is a system that is used when the web service request apparatus 12 encounters no network restrictions in access to the web service provision apparatus 11. The web service request apparatus 12 establishes a Transmission Control Protocol (TCP) session with the web service provision apparatus 11 whenever it sends a previously defined command message so as to control the web service provision apparatus 11 and terminates the established session when a response message is received from the web service provision apparatus 11.

In order to establish the session, the web service request apparatus 12 sends an HTTP request message 10A to the web service provision apparatus 11. The body of the HTTP request message includes a SOAP request message constructed using various XML suitable for provision of a service.

The web service provision apparatus 11 that received the HTTP request message 10A establishes a TCP session with the web service request apparatus 12 and provides service to the web service request apparatus 12 according to the received message. Thereafter, the web service provision apparatus 11 transmits an HTTP response message 10B including a SOAP response message to the web service request apparatus 12 and terminates the TCP session with the web service request apparatus 12.

As described above, the web service system using SOAP binding is a system that can be used when the web service provision apparatus 11 and the web service request apparatus 12 are included in the same network or the web service provision apparatus 11 is included in a public network. In other words, the prior art web service system is a system that can be used in the case where it is easy for the web service request apparatus 12 to access the web service provision apparatus 11.

Figure 2 is a diagram showing a prior art web service system using reverse SOAP binding.

Reverse SOAP binding is a method in which a web service provision apparatus 21 having limited operational capability provides a service to a web service request apparatus 22 having an HTTP server module via an HTTP client module. The reverse SOAP binding enables the web service request apparatus 22 to easily access the web service provision apparatus 21 existing within a private network.

In order to provide services, the web service provision apparatus 21 sends an HTTP request message 20A.

The web service request apparatus 22 that has received the HTTP request message transmits an HTTP response message 20B including a SOAP request message, thereby requesting the service from the web service provision apparatus 21.

The web service provision apparatus 21 provides a service to the web service request apparatus 22 according to the received SOAP request message and transmits an HTTP request message 20C including a SOAP response message.

That is, reverse SOAP binding is a method in which the web service provision apparatus 21 first makes an attempt to gain access to the web service request apparatus 22 in order to examine whether a required service exists. The method can be used when the web service provision apparatus 21 and the web service request apparatus 22 are located in different networks.

As described above, SOAP binding has a limitation in that the web service provision apparatus and the web service request apparatus must exist in the same network. Furthermore, there may be a case where, when the Internet Protocol (IP) address of the web service provision apparatus is a dynamic IP address, access by the web service request apparatus is limited due to changes in the dynamic address.

Furthermore, reverse SOAP binding is disadvantageous in that it requires a plurality of message transmissions and receptions and a plurality of TCP connections in order to provide a single service.

Accordingly, there is a need for a method in which a web service request apparatus existing in a different network can receive service from a web service provision apparatus existing in a private network via a minimal number of TCP connections.

According to the present invention there is provided an apparatus and method as set forth in the appended claims. Preferred features of the invention will be apparent from the dependent claims, and the description which follows.

An aspect of the present invention allows a web service provision apparatus existing within a private network to send an access request message to a web service request apparatus existing outside the private network and then to maintain a session with the web service request apparatus, so that the web service request apparatus can receive web services.

According to an aspect of the present invention, there is provided a web service provision apparatus including a message generation unit generating an access request message including connection maintaining information; a session management unit managing a session with a web service request apparatus that has received the access request message; and a task processing unit processing a task according to a task request message from the web service request apparatus, which is received through the session.

According to another aspect of the present invention, there is provided a web service request apparatus including a session management unit examining an access request message received from a web service provision apparatus and establishing a session with the web service provision apparatus according to results of the examination; a task management unit managing a list of tasks to be requested from the web service provision apparatus; and a transmission/reception unit (550) transmitting a task request message to the web service provision apparatus through the session.

According to another aspect of the present invention, there is provided a web service provision method including generating an access request message including connection maintaining information; transmitting the generated access request message to a web service request apparatus; establishing a session with the web service request apparatus that has received the access request message; and processing a task according to a task request message from the web service request apparatus, which is received through the session.

According to another aspect of the present invention, there is provided a web service request method including receiving an access request message from a web service provision apparatus; examining the received access request message and establishing a session with the web service provision apparatus according to results of the examination; generating a task request message including a list of tasks to be requested from the web service provision apparatus; and transmitting the task request message to the web service provision apparatus through the session.

The above and other features of the present invention will be more clearly understood from the following detailed description taken in conjunction with the accompanying drawings, in which:
Figure 1 is a diagram showing a related art web service system using SOAP binding;
Figure 2 is a diagram showing a related art web service system using reverse SOAP binding;
Figure 3 is a diagram showing a web service system according to an embodiment of the present invention;
Figure 4 is a block diagram showing a web service provision apparatus according to an embodiment of the present invention;
Figure 5 is a block diagram showing a web service request apparatus according to an embodiment of the present invention;
Figure 6 is an example of the XML code of an access request message according to an embodiment of the present invention;
Figure 7 is an example of the XML code of a connection release message according to an embodiment of the present invention;
Figure 8 is an example of the XML code of a connection maintaining message according to an embodiment of the present invention;
Figure 9 is a flowchart showing a web service provision process according to an embodiment of the present invention; and
Figure 10 is a flowchart showing a web service request process according to an embodiment of the present invention.

Aspects of the present application will become more readily apparent from a detailed description given below. However, it should be understood that the detailed description and specific examples, while indicating preferred embodiments of the invention, are given by way of illustration only, since various changes and modifications within the spirit and scope of the invention will become apparent to those skilled in the art from this detailed description. In describing the accompanying drawings, like reference numerals designate like elements throughout the specification.

The above aspects of the present invention will now be described in detail in connection with specific embodiments with reference to the accompanying drawings. It will be understood that combinations of respective blocks of the accompanying block diagrams and respective steps of the accompanying flowcharts are executable by computer program instructions. The computer program instructions can be installed in the processors of a general-purpose computer, a special-purpose computer, and other programmable data processing equipments. Therefore, the instructions executed by the processors of the computers or other programmable data processing equipments create means for performing functions described in flowchart blocks. The computer program instructions can be stored in a computer-available or computer readable memory that can be oriented toward the computer or other programmable data processing equipments in order to implement the functions in a specific manner. Therefore, the instructions stored in the computer-available or computer readable memory can produce manufacturing articles including the instruction means for performing the functions described in the flowchart blocks. Since the computer program instructions can be installed in the computer or other programmable data processing equipments, a series of operating steps are performed on the computer or other programmable data processing equipments to create a process executed by the computer. Accordingly, the instructions that execute the computer or other programmable data processing equipments can be provided as steps of executing the functions described in the flowchart blocks.

Furthermore, each block may represent a part of a module, segment or code, which includes one or more executable instructions for executing specific logical functions. In addition, it is to be noted that in several alternative embodiments, the functions described in the blocks can be generated in different orders. For example, two blocks that are sequentially shown may be performed substantially at the same time or may be performed in reverse order according to a corresponding function.

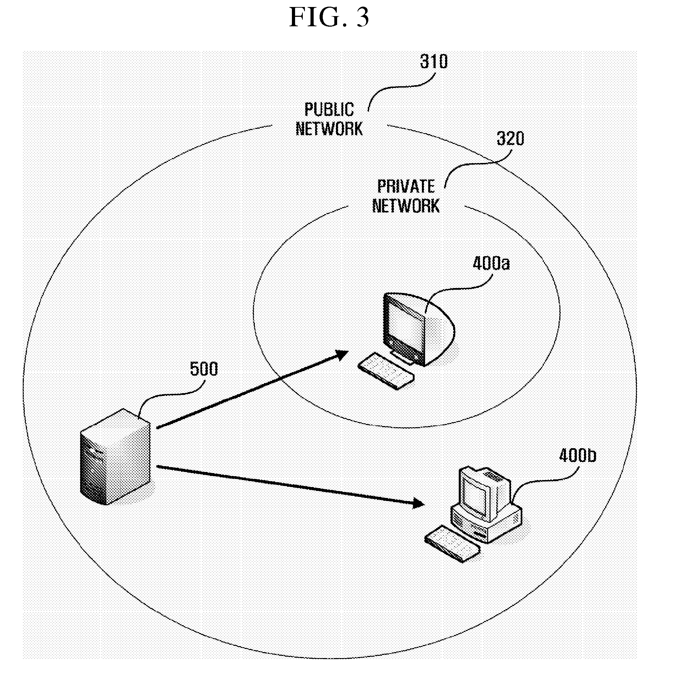

Figure 3 is a diagram showing a web service system according to an embodiment of the present invention. The web service system includes web service provision apparatuses 400a and 400b and a web service request apparatus 500.

The web service provision apparatuses 400a and 400b perform tasks according to the request of the web service request apparatus 500. The web service provision apparatuses 400a and 400b and the web service request apparatus 500 request and perform tasks by exchanging messages according to web service specifications. That is, the web service provision apparatuses 400a and 400b are managed by the web service request apparatus 500.

The web service request apparatus 500 according to an embodiment of the present invention can manage not only the web service provision apparatus 400b included in a public network 310, but also the web service provision apparatus 400a included in a private network 320. It is to be noted that the term "web service provision apparatus" refers to the web service provision apparatus 400a included in the private network 320.

In this case, since the web service request apparatus 500 cannot directly access the private network 320 and request a task, the web service request apparatus 500 requests a task while maintaining a connecting to the web service provision apparatus 400a when an access request message is received from the web service provision apparatus 400a included in the private network 320.

In this case, a session between the web service request apparatus 500 and the web service provision apparatus 400a is maintained until a single task, that is, a service, is completed.

Therefore, messages transmitted and received by the web service provision apparatus 400a until a single task is completed are transmitted and received via the originally generated session, not respectively generated sessions.

When an HTTP request message and an HTTP response message have been transmitted and received, the connection between the web service provision apparatus 400a and the web service request apparatus 500 is released. In this embodiment of the present invention, the connection between the web service provision apparatus 400a and the web service request apparatus 500 is maintained by including connection maintaining information in an HTTP message.

That is, when the version of HTTP is 1.0, the web service provision apparatus 400a and the web service request apparatus 500 maintain a connection by including "Keep-Alive" in the header of an HTTP message. When the version of HTTP is 1.1, the web service provision apparatus 400a and the web service request apparatus 500 maintain a connection using "Connection" included in the header of an HTTP message. For example, when "Connection: Keep-Alive" is included in the header of an HTTP message, a connection is maintained. In contrast, when "Connection: Close" is included in the header of an HTTP message, a connection is released.

In this case, the web service request apparatus 500 cannot establish a session with the web service provision apparatus 400a until the web service provision apparatus 400a attempts to gain access to the web service request apparatus 500. To this end, the web service provision apparatus 400a notifies the web service request apparatus 500 of the transmission cycle of an access request message.

The web service request apparatus 500 receives the access request message of the web service provision apparatus 400a with reference to the notified cycle and establishes a session with the web service provision apparatus 400a. Thereafter, the web service request apparatus 500 transmits a task request message via the established session. The web service provision apparatus 400a that has received the task request message performs the requested task.

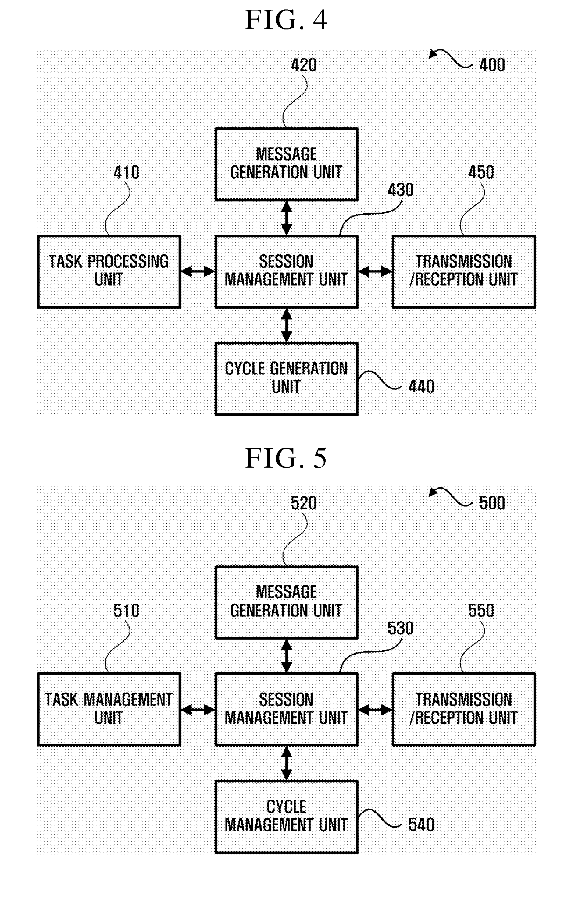

Figure 4 is a block diagram showing a web service provision apparatus according to an embodiment of the present invention. The web service provision apparatus 400 includes a task processing unit 410, a message generation unit 420, a session management unit 430, a cycle generation unit 440, and a transmission/reception unit 450.

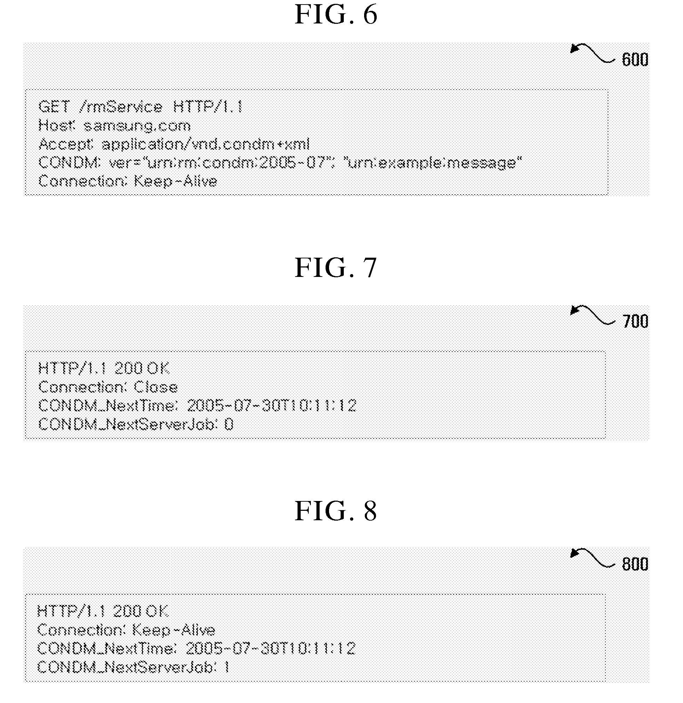

The message generation unit 420 generates an access request message. The access request message may be included in an HTTP request message in HTTP GET or HTTP POST form. Figure 6 shows an example of an access request message 600 included in the HTTP request message in HTTP GET form. In this case, the HTTP request message may not include the sentence <SOAP: Envelope>.

Furthermore, the access request message 600 may include information used to maintain a connection to the web service request apparatus 500. In the XML code of Figure 6, "Connection: Keep-Alive" corresponds to such information.

In the XML code of Figure 6, CONDM refers to a binding name for maintaining the connection between the web service provision apparatus 400 and the web service request apparatus 500 according to an embodiment of the present invention.

The message generation unit 420 also functions to generate an HTTP message to be transmitted to the web service request apparatus 500, as well as the access request message 600. That is, the message generation unit 420 generates a response message to a task request by the web service request apparatus 500 or generates a request message to request a task from the web service request apparatus 500.

In this case, the message generation unit 420 may maintain the connection with the web service request apparatus 500 by including the connection maintaining information "Keep-Alive" or "Connection" in the header of the HTTP message, or may release the connection with the web service request apparatus 500 by including the connection release information "Connection: Close" in the header of the HTTP message.

The session management unit 430 manages a session established with the web service request apparatus 500. In other words, the session management unit 430 may maintain or terminate the session with the web service request apparatus 500 with reference to information included in the header of the HTTP message received from the web service request apparatus 500. When no message exchange with the web service request apparatus 500 occurs for a specific time period, the session management unit 430 may terminate the corresponding session.

The task processing unit 410 functions to process a task in response to a task request message from the web service request apparatus 500, which is received through the session. That is, the task processing unit 410 provides the service requested by the web service request apparatus 500.

In order to perform a single service, a plurality of messages are transmitted and received between the web service provision apparatus 400 and the web service request apparatus 500. The session management unit 430 maintains the configuration of the session until a task is completed by one task processing unit 410. To this end, the session management unit 430 causes the message generation unit 420 to generate a corresponding HTTP message. In other words, the session management unit 430 causes the message generation unit 420 to generate the HTTP message including connection maintaining information until the performance of a service is completed and to generate the HTTP message including connection release information after the performance of the service is completed.

The cycle generation unit 440 generates a transmission cycle of the access request message 600 to be transmitted to the web service request apparatus 500. That is, the access request message 600 is transmitted according to the cycle generated by the cycle generation unit 440. Whenever the access request message 600 is transmitted, communication with the web service request apparatus 500 can be performed.

The cycle generation unit 440 may generate the transmission cycle of the access request message 600 in accordance with a previously defined cycle or in response to the request from the web service request apparatus 500.

The transmission/reception unit 450 functions to transmit and receive messages to and from the web service request apparatus 500. The communication method between the transmission/reception unit 450 and the web service request apparatus 500 may include wired communication, such as Ethernet, Universal Serial Bus (USB), Institute of Electric and Electronics Engineers (IEEE) 1394, and serial or parallel communication, or wireless communication, such as infrared, Bluetooth, home Radio Frequency (RF), and wireless Local Area Network (LAN) communication.

Figure 5 is a block diagram showing the web service request apparatus 500 according to an embodiment of the present invention. The web service request apparatus 500 includes a task management unit 510, a message generation unit 520, a session management unit 530, a cycle management unit 540, and a transmission/reception unit 550.

The session management unit 530 manages a session established with the web service provision apparatus 400. In other words, the session management unit 530 may maintain or terminate the session with the web service provision apparatus 400 with reference to information included in the header of the HTTP message received from the web service provision apparatus 400. When no message exchange with the web service provision apparatus 400 occurs for a specific time period, the session management unit 430 may terminate the corresponding session.

In particular, the session management unit 530 functions to examine the access request message 600 received from the web service provision apparatus 400 and to manage the session with the web service provision apparatus 400 according to the results of the examination. In other words, the session management unit 530 establishes the session with the web service provision apparatus 400 after confirming that the received message is the access request message 600.

The message generation unit 520 also functions to generate an HTTP message to be transmitted to the web service provision apparatus 400. That is, the message generation unit 520 generates a task request message requesting a task from the web service provision apparatus 400, or generates a response message in response to the task request from the web service provision apparatus 400.

In this case, the message generation unit 520 may maintain the connection with the web service provision apparatus 400 by including the connection maintaining information "Keep-Alive" or "Connection" in the header of the HTTP message, or may release the connection with the web service provision apparatus 400 by including the connection release information "Connection: Close" in the header of the HTTP message.

The task management unit 510 functions to manage a list of tasks to be requested from the web service provision apparatus 400. In other words, the task management unit 510 manages a list of tasks to be requested and a list of tasks that have been requested. The list of tasks to be requested is transferred to the message generation unit 520 for the generation of messages requesting tasks. The list of tasks that have been requested is deleted.

For example, if there is a task to be requested from the web service provision apparatus 400, the task management unit 510 causes the message generation unit 520 to generate an HTTP message (connection maintaining message) including connection maintaining information and a list of tasks. If there is no task to be requested from the web service provision apparatus 400, the task management unit 510 causes the message generation unit 520 to generate an HTTP message (connection release message) including connection release information and the next access time.

This will be described in more detail with reference to Figures 7 and 8. Figure 7 illustrates the connection release message 700 including connection release information (Connection: Close) and information (CONDM_NextServerJob: 0) indicating that there is no task to be requested. Figure 8 illustrates the connection maintaining message 800 including connection maintaining information (Connection: Keep-Alive) and information (CONDM_Next Server Job : 1) indicating that there is a task to be requested.

For reference, although the messages of Figures 7 and 8 include flags indicating whether there are tasks to be requested as information about tasks to be requested, this is only illustrative and, therefore, the messages may include list of tasks to be requested, the identification numbers of tasks to be requested, or the like.

Meanwhile, CONDM_Next Time included in Figures 7 and 8 is the next access time, which can be set by the cycle management unit 540.

The cycle management unit 540 manages a reception cycle of the access request message 600 received from the web service provision apparatus 400.

The web service request apparatus 500 cannot gain access to the web service provision apparatus 400 directly, but can gain access to the web service provision apparatus 400 through a session established according to the access request message 600 of the web service provision apparatus 400.

In this case, the access request message 600 is periodically received from the web service provision apparatus 400. The cycle management unit 540 causes the session management unit 530 to determine whether to maintain the configuration of the session with reference to the time of a subsequent access request message 600 included in the access request message 600.

Furthermore, the cycle management unit 540 may determine the transmission cycle of the access request message 600 of the web service provision apparatus 400 in such a way as to set the next access time when the current session is terminated and cause the message generation unit 520 to generate a message for the next access time.

The transmission/reception unit 550 functions to transmit and receive messages to and from the web service provision apparatus 400. The communication between the transmission/reception unit 550 and the web service provision apparatus 400 may be wired communication, such as Ethernet, USB, IEEE 1394, and serial or parallel communication, or wireless communication, such as infrared, Bluetooth, home RF, and wireless LAN communication.

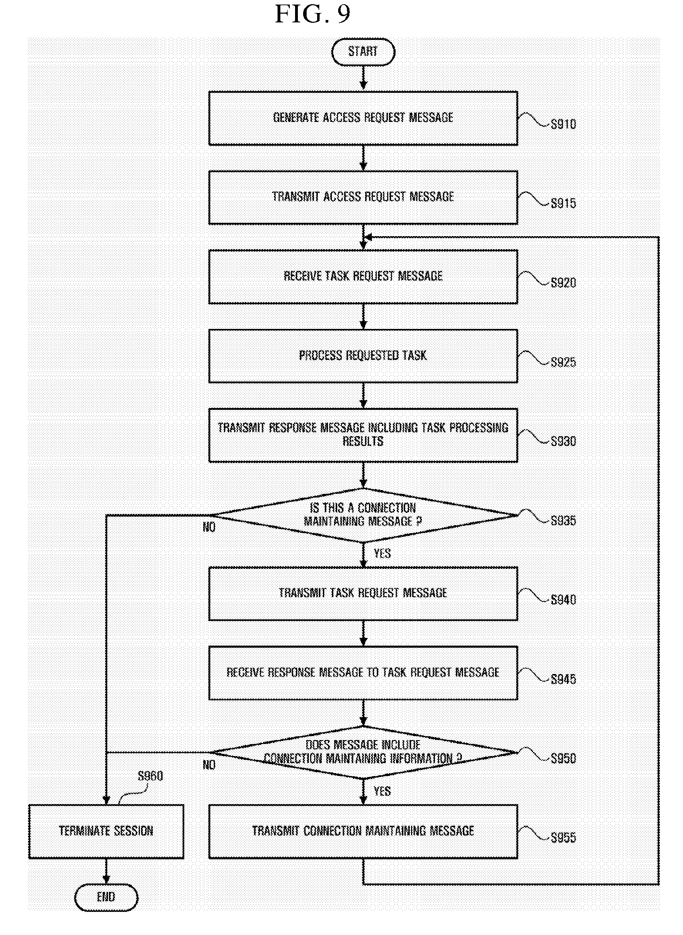

Figure 9 is a flowchart showing a web service provision process according to an embodiment of the present invention.

In this embodiment of the present invention, it is assumed that the web service provision apparatus 400 and the web service request apparatus 500 are included in different networks and that the web service provision apparatus 400 is included in a private network, so that the web service request apparatus 500 cannot gain access to the web service provision apparatus 400 directly.

Accordingly, in order to establish a session between the web service provision apparatus 400 and the web service request apparatus 500, the web service provision apparatus 400 must transmit an HTTP message first.

For this purpose, the message generation unit 420 of the web service provision apparatus 400 generates the access request message 600 at step S910. The access request message 600 may be included in the HTTP request message in HTTP GET or HTTP POST form. In this case, the HTTP request message may not include the sentence <SOAP: Envelope>.

The generated access request message 600 is transmitted to the web service request apparatus 500 through the transmission/reception unit 450 at step S915. Accordingly, a session is established between the web service provision apparatus 400 and the web service request apparatus 500. In this case, the transmission cycle of the access request message 600 is determined according to a cycle generated by the cycle generation unit 440.

As the session is established, the transmission/reception unit 450 receives a task request message from the web service request apparatus 500 at step 5920. The task request message may be an HTTP response message including a SOAP request message.

The task processing unit 410 processes a requested task at step S925, and the message generation unit 420 generates a response message including task processing results. The response message may be an HTTP request message including a SOAP response message.

The generated response message is transmitted to the web service request apparatus 500 through the transmission/reception unit 450 at step S930.

The transmission/reception unit 450 may also receive the connection maintaining message 800 or the connection release message 700 from the web service request apparatus 500. The connection maintaining message 800 or the connection release message 700 may be an HTTP response message not including the sentence <SOAP: Envelope>. The session management unit 430 determines whether a received message is the connection maintaining message 800 or the connection release message 700 at step S935. If the received message is determined to be the connection maintaining message 800, the session management unit 430 causes the message generation unit 420 to generate a task request message.

Therefore, the message generation unit 420 generates an HTTP request message including a SOAP request message. The generated HTTP message is transmitted to the web service request apparatus 500 via the transmission/reception unit 450 at step S940.

The transmission/reception unit 450 receives an HTTP response message including a SOAP response message in response to the task request message transmitted from the web service request apparatus 500 at step S945.

In this case, the received HTTP response message may be a message including connection maintaining information and a list of requested tasks or a message including connection release information and a next access time. The session management unit 430 determines whether the received HTTP response message is a message including connection maintaining information and a list of requested tasks or a message including connection release information and the next access time at step S950, and then performs a corresponding task. In other words, if connection release information and the next access time are included in the received HTTP response message, the session management unit 430 terminates the session at step S960 and transmits the next access time to the cycle generation unit 440, so that an access request message 600 can be generated at the corresponding time.

Meanwhile, if connection maintaining information and a list of requested tasks are included in the received HTTP response message, the session management unit 430 maintains the session with the web service request apparatus 500 and causes the message generation unit 420 to generate a connection maintaining message 800. Therefore, the message generation unit 420 generates the connection maintaining message 800. In this case, the connection maintaining message 800 may be an HTTP request message not including the sentence <SOAP: Envelope>.

The generated connection maintaining message 800 is transmitted to the web service request apparatus 500 through the transmission/reception unit 450 at step S955. The transmission/reception unit 450 receives the task request message from the web service request apparatus 500 at step S920. In this case, the task request message may be an HTTP response message including the SOAP request message.

Therefore, the task processing unit 410 processes a requested task at step S925. The message generation unit 420 generates a response message including task processing results. In this case, the response message may be an HTTP request message including the SOAP response message.

The generated response message is transmitted to the web service request apparatus 500 via the transmission/reception unit 450 at step S930.

Furthermore, the transmission/reception unit 450 may receive the connection maintaining message 800 or the connection release message 700 from the web service request apparatus 500. The connection maintaining message 800 or the connection release message 700 may be an HTTP response message not including the sentence <SOAP: Envelope>. Therefore, the session management unit 430 determines whether the received message is a connection maintaining message 800 or a connection release message 700 at step S935. If the received message is determined to be the connection release message 700, the session management unit 430 terminates the session with the web service request apparatus 500 at step S960.

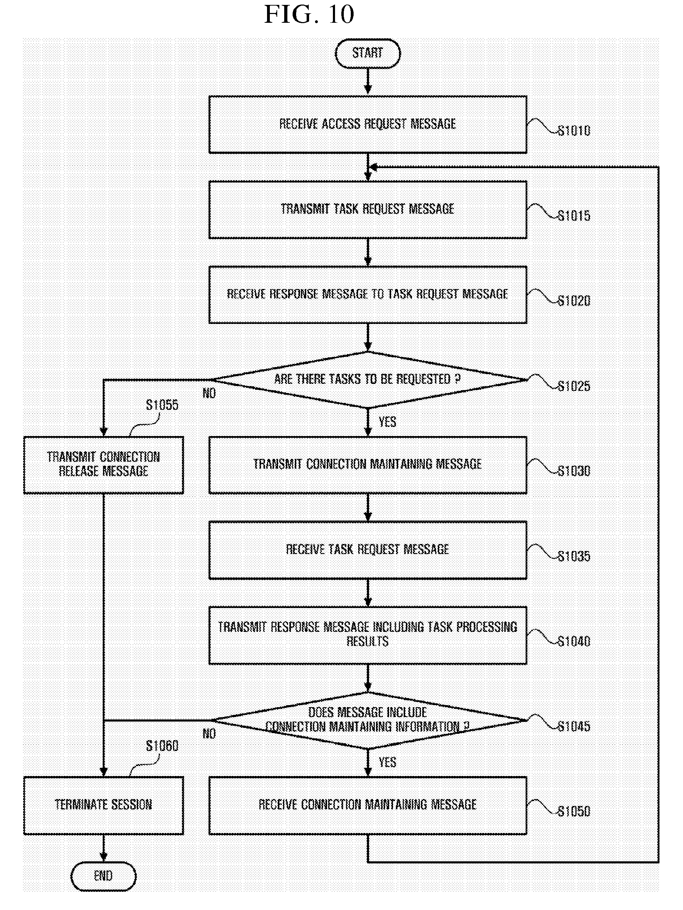

Figure 10 is a flowchart showing a web service request process according to an embodiment of the present invention.

As described above, since the web service request apparatus 500 cannot directly access the web service provision apparatus 400 included in the private network, the transmission/reception unit 550 of the web service request apparatus 500 receives the access request message 600 from the web service provision apparatus 400 while waiting for the access request from the web service provision apparatus 400 at step S1010.

The received access request message 600 is transferred to the session management unit 530. The session management unit 530 confirms that the received message is the access request message 600 and then establishes a session with the web service provision apparatus 400.

As the session is established, the message generation unit 520 generates a task request message. This task request message may be an HTTP response message including a SOAP request message.

The transmission/reception unit 550 transmits the generated task request message to the web service provision apparatus 400 at step S1015, and receives a response message thereto at step S1020. This response message may be an HTTP request message including a SOAP response message.

The task management unit 510 then determines whether there are tasks to be requested from the web service provision apparatus 400 at step S1025 and causes the message generation unit 520 to generate a corresponding message. If it is determined that there are tasks to be requested from the web service provision apparatus 400, the message generation unit 520 generates the connection maintaining message 800 including connection maintaining information and a list of tasks. If it is determined that there are no tasks to be requested from the web service provision apparatus 400, the message generation unit 520 generates a connection release message 700 including connection release information and a next access time.

In this case, the generated connection maintaining message 800 or the generated connection release message 700 may be an HTTP response message not including the sentence <SOAP: Envelope>.

The generated message is transmitted to the web service provision apparatus 400 through the transmission/reception unit 550 at steps S1030 and S1055. If the transmitted message is the connection release message 700, the session with the web service provision apparatus 400 is terminated at step S1060. If the transmitted message is the connection maintaining message 800, a task request message is received at step S1035. In this case, the task request message may be an HTTP request message including a SOAP request message.

Accordingly, the task processing unit (not shown) performs a requested task and the message generation unit 520 generates a response message including the task processing result. The response message may be an HTTP response message including a SOAP response message.

The generated response message is transmitted to the web service provision apparatus 400 through the transmission/reception unit 550 at step S1040.

The response message may be a message including connection maintaining information and a list of requested tasks or a message including connection release information and a next access time. The session management unit 530 determines whether the response message is a message including connection maintaining information and a list of requested tasks or a message including connection release information and the next access time at step S1045. If it is determined that the response message is a message including connection release information and the next access time, the session management unit 530 terminates the session with the web service provision apparatus 400 at step S1060. The cycle management unit 540 stores the next access time, so that the transmission/reception unit 550 can receive the access request message 600 at a corresponding time.

Meanwhile, if the response message is determined to be a message including connection maintaining information and a list of requested tasks, the transmission/reception unit 550 receives the connection maintaining message 800 from the web service provision apparatus 400 at step S1050. In this case, the connection maintaining message 800 may be an HTTP request message not including the sentence <SOAP: Envelope>.

When the connection maintaining message 800 is received, the message generation unit 520 generates a task request message. This task request message may be an HTTP response message including a SOAP request message.

The transmission/reception unit 550 transmits the generated task request message to the web service provision apparatus 400 at step S1015, and receives a response message thereto at step S1020. In this case, the response message may be an HTTP request message including a SOAP response message.

In addition, the task management unit 510 determines whether there are tasks to be requested from the web service provision apparatus 400 at step S1025 and causes the message generation unit 520 to generate a corresponding message. If it is determined that there are tasks to be requested from the web service provision apparatus 400, the message generation unit 520 generates the connection maintaining message 800 including the connection maintaining information and a list of tasks. If it is determined that there are no tasks to be requested from the web service provision apparatus 400, the message generation unit 520 generates the connection release message 700 including connection release information and the next access time.

The generated connection maintaining message 800 and the generated connection release message 700 may be HTTP response messages not including the sentence <SOAP: Envelope>.

The generated message is transmitted to the web service provision apparatus 400 via the transmission/reception unit 550 at steps S1030 and S1055. If the transmitted message is the connection release message 700, the session with the web service provision apparatus 400 is terminated at step S1060.

As described above, the web service provision apparatus and method and the web service request apparatus and method according to the present invention have the following advantages.

First, there is an advantage in that a web service request apparatus existing outside a private network can gain access to a web service provision apparatus existing within the private network.

Second, there is an advantage in that a web service request apparatus existing outside can gain access to a web service provision apparatus having a dynamic IP address.

Third, there is an advantage in that load imposed on network bandwidth can be reduced because a service is provided while a session between a web service provision apparatus and a web service request apparatus is maintained.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A web service provision apparatus (400) comprising:
a message generation unit (420) which generates an access request message (600) including connection maintaining information;
a session management unit (430) which manages a session with a web service request apparatus (500) that has received the access request message (600); and
a task processing unit (410) which processes a task according to a task request message from the web service request apparatus (500), the task request message being received through the session.

2. The apparatus of claim 1, wherein the connection maintaining information is included in a header of an HTTP message.

3. The apparatus of claim 1 or 2, wherein the access request message (600) is included in an HTTP message in HTTP GET or HTTP POST form.

4. The apparatus of claim 1, 2 or 3, wherein the session management unit (430) maintains the session until a message exchange required to process the requested task is completed.

5. The apparatus of any preceding claim, further comprising a cycle generation unit (440) which generates a transmission cycle of the access request message (600) to be transmitted to the web service request apparatus (500).

6. The apparatus of claim 5, wherein the cycle generation unit (440) generates the transmission cycle of the access request message (600) in accordance with a predetermined cycle or in response to the request from the web service request apparatus (500).

7. A web service request apparatus (500) comprising:
a session management unit (530) which examines an access request message (600) received from a web service provision apparatus (400) and establishes a session with the web service provision apparatus (400) according to results of the examination;
a task management unit (510) which manages a list of tasks to be requested from the web service provision apparatus (400); and
a transmission/reception unit (550) which transmits a task request message to the web service provision apparatus (400) through the session.

8. The apparatus of claim 7, wherein the session management unit (530) maintains the session until a message exchange required to process the requested task is completed.

9. The apparatus of claim 7 or 8, further comprising a cycle management unit (540) managing a reception cycle of the access request message (600) received from the web service provision apparatus (400).

10. The apparatus of claim 7, 8 or 9, further comprising a message generation unit (420) which generates the task request message to be transmitted to the web service provision apparatus (400),
wherein the transmission/reception unit (550) transmits the task request message generated by the message generation unit (420).

11. A web service provision method comprising:
generating an access request message (600) including connection maintaining information;
transmitting the generated access request message (600) to a web service request apparatus (500);
establishing a session with the web service request apparatus (500) that has received the access request message (600); and
processing a task according to a task request message from the web service request apparatus (500), the task request message being received through the session.

12. The method of claim 11, wherein the connection maintaining information is included in a header of an HTTP message.

13. The method of claim 11 or 12, wherein the access request message (600) is included in an HTTP request message in HTTP GET or HTTP POST form.

14. The method of claim 11, 12 or 13, wherein the establishing comprises maintaining the session until a message exchange required to process the requested task is completed.

15. The method of any of claims 11 to 14, further comprising generating a transmission cycle of the access request message (600) to be transmitted to the web service request apparatus (500).

16. A computer readable recording medium storing a program for executing the method of any of claims 11 to 15.

17. A web service request method comprising:
receiving an access request message (600) from a web service provision apparatus (400);
examining the received access request message (600) and establishing a session with the web service provision apparatus (400) according to results of the examination;
generating a task request message including a list of tasks to be requested from the web service provision apparatus (400); and
transmitting the task request message to the web service provision apparatus (400) through the session.

18. The method of claim 17, wherein the examining and establishing comprises maintaining the session until a message exchange required to process the requested task is completed.

19. The method of claim 17 or 18, further comprising managing a reception cycle of the access request message (600) received from the web service provision apparatus (400).

20. A computer readable recording medium storing a program for executing the method of any of claims 17 to 19.
